# EUROPEAN PATENT SPECIFICATION

(11) **EP 0 255 305 B1**
(45) Date of publication and mention of the grant of the patent: **07.01.1993**
(21) Application number: 87306575.9
(22) Date of filing: 24.07.1987
(51) Int. Cl.: G11B 7/13, G02B 27/00

(54) **Focusing error detecting device and method of manufacturing the same**
Anordnung zum Detektieren von Fokussierungsfehlern und deren Herstellungsverfahren
Dispositif de détection d'erreur de focalisation et méthode de réalisation de celui-ci

(30) Priority: 28.07.1986 JP 178513/86; 31.03.1987 JP 79241/87; 23.01.1987 JP 13611/87
(43) Date of publication of application: 03.02.1988
(73) Proprietor: SHARP KABUSHIKI KAISHA, Osaka 545 (JP)
(72) Inventor: Ogata, Nobuo, Tenri-shi Nara-ken (JP); Nakata, Yasuo, Tenri-shi Nara-ken (JP); Satou, Hideaki, Tenri-shi Nara-ken (JP); Tanaka, Toshiyuki, Kadoma-shi Osaka-fu (JP); Minami, Etsuji, Nara-shi Nara-ken (JP); Yoshida, Yoshio, Tenri-shi Nara-ken (JP); Kurata, Yukio, Tenri-shi Nara-ken (JP); Inoue, Teruaki, Talaichi-gun Nara-ken (JP)
(74) Representative: Brown, Kenneth Richard

(56) References cited:
- EP-A- 0 198 655
- EP-A- 0 226 403
- DE-A- 3 305 675
- US-A- 3 969 573
- PATENT ABSTRACTS OF JAPAN, volume 10, no. 45 (P-430) [2102], 21st February 1986; & JP - A - 60 189 723
- PATENT ABSTRACTS OF JAPAN, volume 10, no. 110 (P-450) [2167], 29th April 1986; & JP - A - 60 241 013
- PATENT ABSTRACTS OF JAPAN, volume 8, no. 144 (P-284)[1581], 5th July 1984; & JP - A - 59 044 017

## Description

The present invention relates to a focusing error detecting device for use in optical data detecting apparatus which records and/or reproduces data on a data-recording disc such as an optical disc or an optical magnetic disc with concentric or spiral data tracks and guide tracks formed thereon.

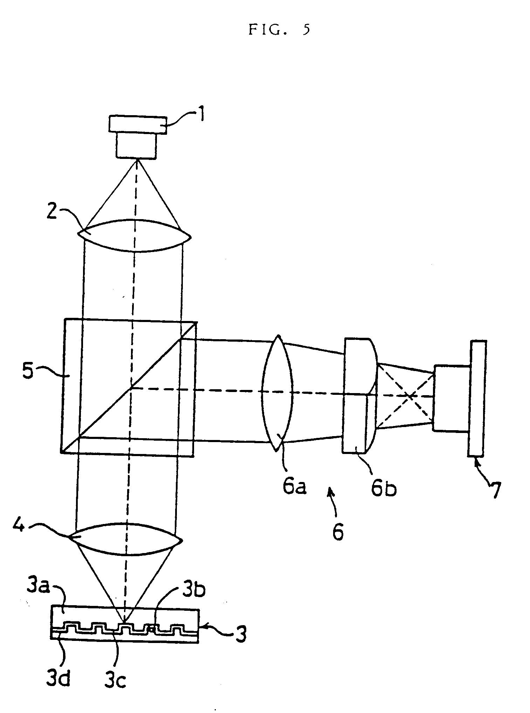

The conventional focusing error detecting device typically comprises, as shown in Fig. 5, a semiconductor laser 1 as a light source, a collimator lens 2 for making parallel the pencil beam of rays emitted by the semiconductor laser 1, an objective lens 4 which focuses the parallel beam of rays to form a beam spot on a data-recording disc 3 and which receives the light beam reflected by the disc 3, a beam splitter 5 for redirecting the reflected light beam incident on the objective lens, an optical system 6 comprising a convergent lens 6a and a cylindrical lens 6b to make the redirected light beam an astigmatic pencil beam of rays and form a beam spot, and a quadrant-division optical detector 7 containing four optical sensor blocks 7a, 7b, 7c and 7d divided by two crossing boundaries each at 45° to the generating line of the cylindrical lens 6b, the quadrant-division detector 7 sensing the beam spot formed thereon, thereby detecting the focusing error of the beam spot on the data-recording disc 3 according to the configuration of the beam spot on the quadrant-division optical detector 7.

The data-recording disc 3 comprises a substrate 3a made of a light-transmitting material such as glass, with concentric or spiral grooves formed on the substrate 3a to define data tracks 3b and guide tracks 3c, and a data-recording medium 3d comprising a thin film of rare earth-transition metal amorphous alloy deposited over the substrate 3a by evaporation or sputtering, thereby permitting high density recording and reproduction of data.

Detection of focusing error of a beam spot formed on the data recording disc 3 is based on the principles set out below. Assuming the light quantities received by the four optical sensor blocks 7a through 7d of the quadrant-division optical detector 7 are Sa, Sb, Sc and Sd, respectively, then the degree of focalization "f" of a beam spot formed on the data-recording disc 3 is calculated by the expression: (Sa + Sc) - (Sb + Sd).

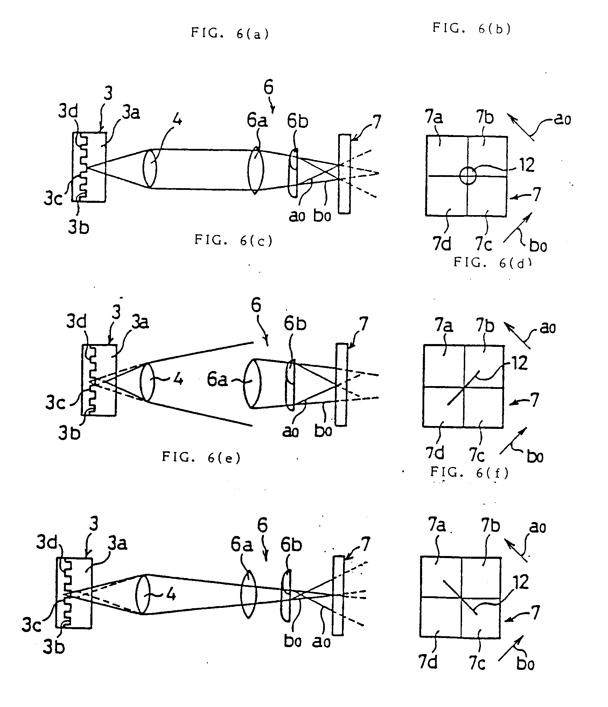

Since a beam spot 12 which is focused properly on the quadrant-division optical detector 7 will be round as shown in Figs. 6(a) and 6(b), the light quantities 5a, 5b, 5c and 5d will be equal. Accordingly, the degree of focalization "f" calculated by the expression: (Sa + Sc) - (Sb + Sd) is 0 (zero) for a properly focused beam.

When the objective lens 4 is too close to the disc 3 as shown in Fig. 6(c), the beam spot 12 which is projected on the quadrant-division optical detector 7 is an ellipse with its major axis oriented in the direction bₒ parallel with the generating line of the cylindrical lens 6b, as shown in Fig. 6(d). In this case, the degree of focalization "f" will have a negative value.

On the other hand, when the objective lens 4 is too remote from the data-recording disc 3 as illustrated in Fig. 6(e), the beam spot 12 on the quadrant-division optical detector 7 is an ellipse with its major axis oriented in the direction aₒ at right angles to the generating line of the cylindrical lens 9 as shown in Fig. 6(f). In such cases, the degree of focalization "f" will have a positive value.

If the degree of focalization "f" calculated by the expression (Sa + Sc) - (Sb + Sd) is used as a focusing error signal, it is possible to determine on the basis of the value of the focusing error signal whether the distance between the data-recording disc 3 and the objective lens 4 is correct, too short or too long.

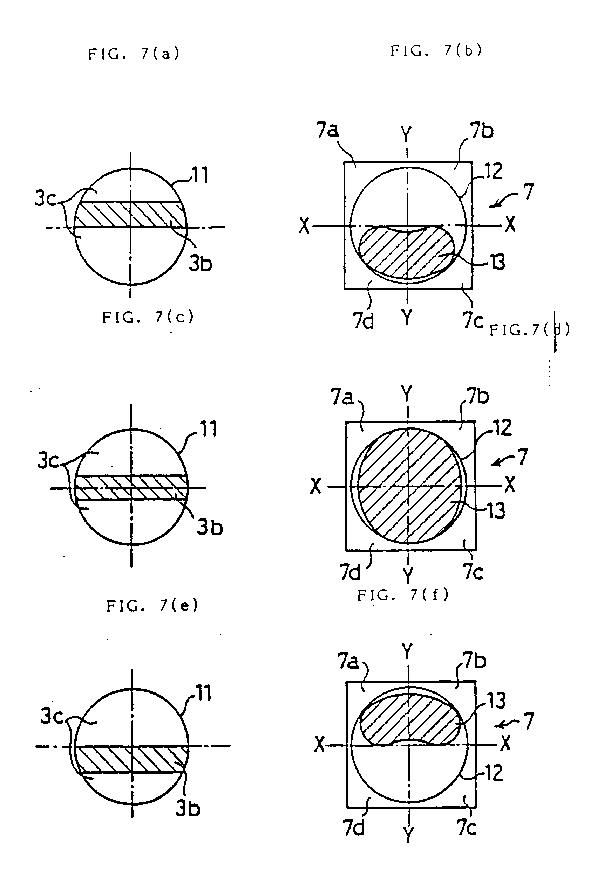

In all cases, the beam spot 12 formed on the quadrant-division optical detector 7 contains a shadow 13 attributable to diffraction by the guide tracks 3c. (This shadow will hereinafter be referred to as a diffraction pattern). Even when the beam spot 12 is properly focused on the quadrant-division optical detector 7 as shown in Figs 6(a) and 6(b), the diffraction pattern 13 may vary as illustrated in Figs. 7(b), 7(d) and 7(f) depending upon the position of the beam spot 11 in relation to the data tracks 3b on the data-recording disc 3 as shown in Figs. 7(a), 7(c) and 7(e).

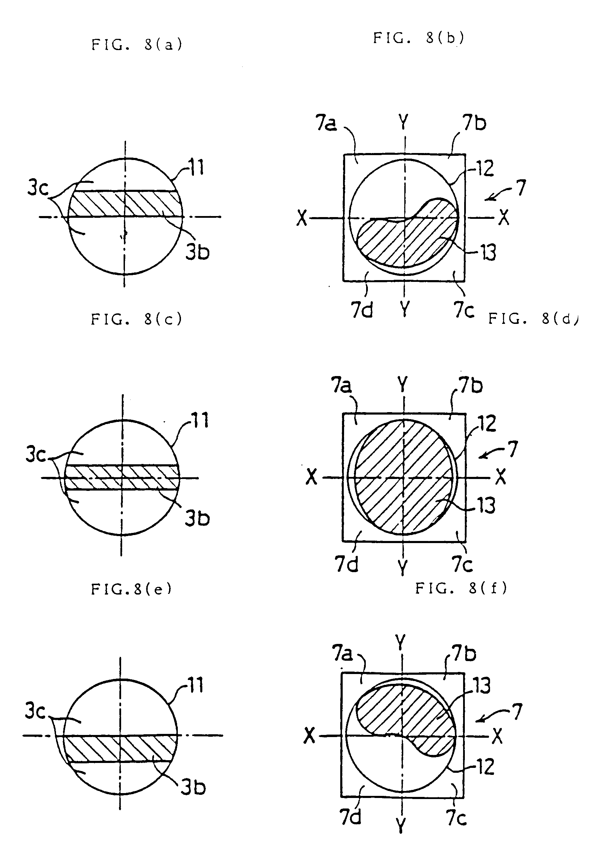

When there is no aberration by the optical system between the light source 1 and the data-recording disc 3, the diffraction pattern 13 is symmetrical with respect to the axis corresponding to the direction at right angles to the guide tracks 3c. Therefore, if the quadrant-division optical detector 7 is positioned in such a manner that the boundary Y-Y dividing the optical sensor blocks 7a and 7d from the optical sensor blocks 7b and 7c coincides with the axis corresponding to the direction at right angles to the guide tracks 3c, the degree of focalization "f" becomes 0, regardless of the diffraction pattern 13 shown in Figs. 7(b), 7(d) and 7(f), as long as the beam spot 11 is properly focused on the data-recording disc 3. According to the conventional art, however, when there is aberration in the optical system between the light source 1 and the data-recording disc 3, displacement of the beam spot 11 in relation to the data track 3b of the recording disc 3 as shown in Fig. 8(a), 8(c), or 8(e) may impair the symmetry of the diffraction pattern 13 with respect to the axis corresponding to the direction perpendicular to the guide tracks 3c of the recording disc 3 as shown in Fig. 8(b), 8(d) or 8(f) (the phenomenon called crosstalk). Consequently, even if the beam spot 11 is properly focused, the degree of focalization "f" is positive for the diffraction pattern 13 shown in Fig. 8(b) or negative for the diffraction pattern 13 shown in Fig. 8(f). The degree of focalization "f" is zero only for the diffraction pattern 13 shown in Fig. 8(d).

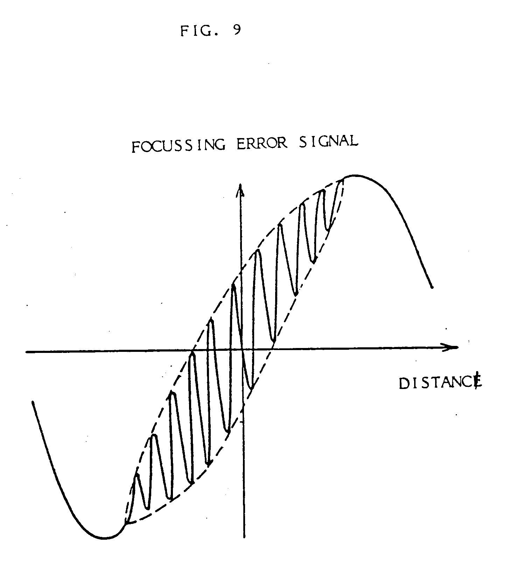

As a result, even if the objective lens 4 is placed in the range appropriate for focalization, minor variation of the distance between the objective lens 4 and the data-recording disc 3 may cause large fluctuation of the value of the focusing error signal as shown in Fig. 9, which hinders stable focus control.

The present invention aims to provide a focusing error detecting device with stable focus control without deteriorating the quality of a focusing error signal, and to provide apparatus for recording, reproducing and/or erasing information on an optical recording medium incorporating such a focusing error detecting device.

EP-A-0 226 403, which comprises prior art in accordance with Article 54(3) EPC, describes an optical head apparatus in which a moulded converging lens is used to converge collimated light onto tracks on an optical disc. Techniques are adopted to minimise astigmatism between the light source and the disc to achieve the most efficient convergence of light, including adjusting the rotational position of the converging lens.

EP-A-0 198 655, also constituting prior art in accordance with Article 54(3) EPC, describes an optical head which includes a half-mirror to act as a beam-splitter and to produce astigmatism for focus error detection. To reduce coma caused by use of a half-mirror, a parallel plate is included in the system, its inclination with respect to the optical axis being adjusted to minimise the coma.

To overcome the problems of the prior art, the invention provides in one aspect a focusing error detecting device made in accordance with a method of manufacture comprising the following steps:
providing a light source; a collimator lens for making parallel the beam of rays emitted by said light source; an objective lens to focus the parallel beam of rays to form a beam spot on a data-recording disc with data tracks and guide tracks formed thereon and which receives the beam of rays reflected from said data-recording disc; an optical system for forming a beam spot in the form of astigmatism from the reflected beam of rays incident on said objective lens; and an optical detector having a plurality of divided optical sensor blocks for receiving the beam spot formed on said optical detector; and
arranging said optical detector to detect the focusing error of the beam spot formed on said data-recording disc on the basis of the configuration of the received beam spot,
said method being characterised by the step of adjusting said objective lens and/or said collimator lens to such rotational positions about the optical axis as to minimize the influence which aberration in the optical system between the light source and the optical disc has on the symmetry with respect to the axis corresponding to the direction at right angles to the guide tracks, of a diffraction pattern formed in said beam spot on the optical detector.

Alternatively, in another aspect the invention provides a focusing error detecting device made in accordance with another method of manufacture comprising the following steps:
providing a light source; a collimator lens for making parallel the beam of rays emitted by said light source; an objective lens to focus the parallel beam of rays to form a beam spot on a data-recording disc with data tracks and guide tracks formed thereon and which receives the beam of rays reflected from said data-recording disc); an optical system for forming a beam spot in the form of astigmatism from the reflected beam of rays incident on said objective lens; a parallel plate inclined with respect to the optical axis; and an optical detector; and
arranging said optical detector to detect the focusing error of the beam spot formed on said data-recording disc on the basis of the configuration of the received beam spot;
said method being characterised by the step of placing the parallel plate in either the optical divergent or the convergent zone in the optical path between a light source and a data-recording disc, and adjusting the rotational position of said parallel plate about the optical axis so as to minimize the influence which astigmatism in the optical system between the light source and the data-recording disc has on the symmetry with respect to the axis corresponding to the direction at right angles to the guide tracks, of a diffraction pattern formed in said beam spot on the optical detector.

In devices made in accordance with the manufacturing methods of the present invention, if a diffraction pattern is generated in a beam spot on the optical detector due to diffraction by the guide tracks and if the diffraction pattern varies with displacement of the beam spot on the data-recording disc in relation to the guide tracks, the symmetry of the diffraction pattern with respect to the axis corresponding to the direction perpendicular to the guide tracks will not be impaired by the influence of the aberration in the optical system between the light source and the data-recording disc. Since the quality of a focusing error signal is not deteriorated, it is possible to detect a focusing error accurately.

In order that the present invention may become more fully understood a detailed description will be given hereinbelow of embodiments thereof by way of example, and with reference to the accompanying drawings wherein:
Fig. 1 is an exploded perspective view of a first focusing error detecting device made in accordance with the method of the present invention;
Fig. 2 is a longitudinal sectional view of the objective lens unit of the detector of Fig. 1;
Figs. 3(a) through 3(f) show possible positions of a beam spot in relation to the data tracks and the corresponding diffraction patterns;
Fig. 4 is a graph showing the relationship between the distance from the optical disc to the objective lens and a focusing error signal;
Fig. 5 shows the schematic construction of a conventional focusing error detecting device;
Figs. 6(a) through 6(f) illustrate the principle on which the conventional focusing error detecting device detects a focusing error;
Figs. 7(a) through 7(f) show possible positions of a beam spot in relation to the data tracks and the corresponding diffraction patterns in the conventional focusing error detecting device;
Figs. 8(a) through 8(f) show possible positions of a beam spot in relation to the data tracks and the corresponding diffraction pattern in the conventional focusing error detecting device when the collimator lens and the objective lens generate aberration;
Fig. 9 is a graph showing the relationship between the distance from the optical disc to the objective lens and a focusing error signal in the conventional focusing error detecting device; and
Fig. 10 is an explanatory drawing showing the construction of a second focusing error detecting device made in accordance with the method of the present invention.

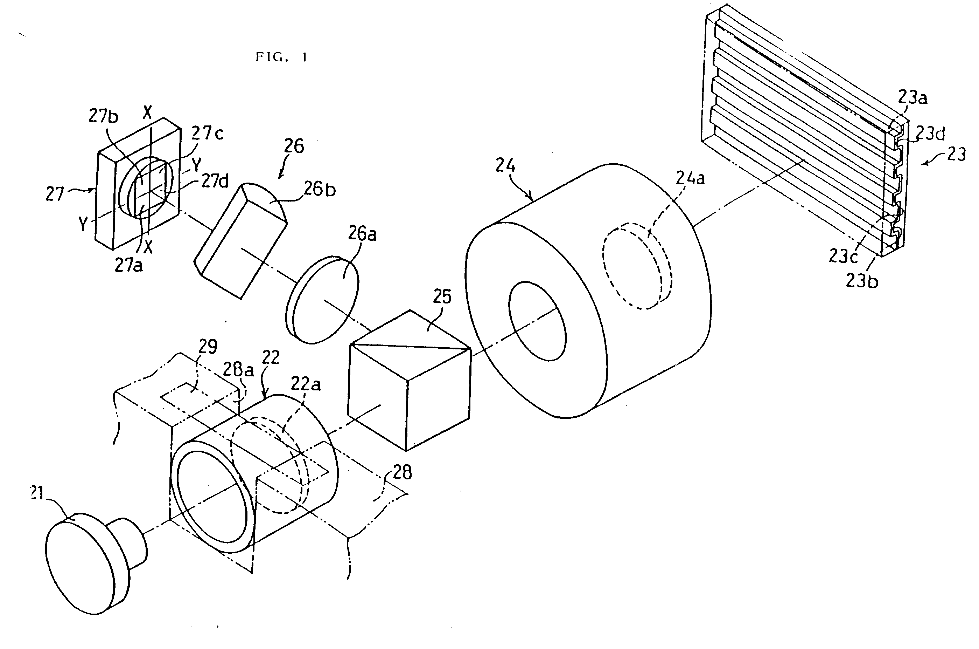

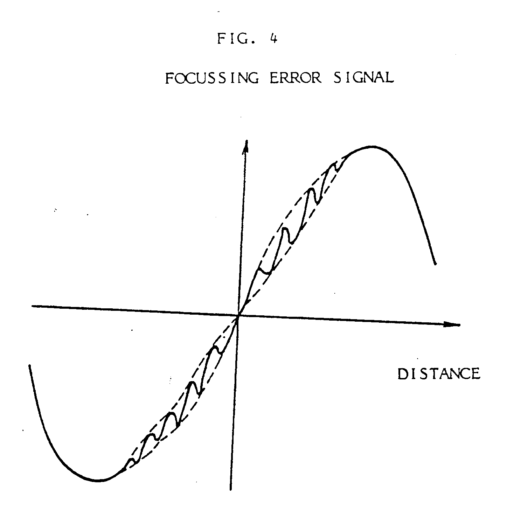

The first embodiment of the present invention is described with reference to Figs. 1 through 4.

As shown in Fig. 1, a focusing error detecting device comprises a semiconductor laser 21 as a light source; a collimator lens unit 22 including a collimator lens 22a for making parallel the beam of rays emitted by the semiconductor laser 21; an objective lens unit 24 including an objective lens 24a for concentrating the parallel beam of rays to form a beam spot on an optical disc 23 provided as a data-recording disc and for receiving light beams reflected by the optical disc 23; a beam splitter 25 for redirecting the light beams reflected back through the objective lens 24a; an optical system 26 comprising a convergent lens 26a and a cylindrical lens 26b for making the redirected reflected light beam an astigmatic beam of rays to form a beam spot; and a quadrant-division optical detector 27 for sensing the beam spot formed by the optical system 26 and thereby detect the focusing error of the beam spot on the optical disc 23 according to the configuration of the sensed beam spot.

The collimator lens unit 22 is rotatably mounted in a recess 28a in a housing 28 and retained by a tension plate 29.

As a data-recording disc, the optical disc 23 comprises a substrate 23a made of a light-transmitting material such as glass, with concentric or spiral grooves formed in the substrate 23a to define data tracks 23b and guide tracks 23c, the grooves having a depth of about one-eight of the wavelength "λ" of the light emitted by the semiconductor laser 21. A data-recording medium 23d composed of a thin layer of rare earth-transition metal amorphous alloy is deposited by evaporation or sputtering over the substrate 23a, thereby permitting high density data recording and reproduction.

The quadrant-division optical detector 27 includes four optical sensor blocks 27a, 27b, 27c and 27d divided by two crossing boundaries X-X and Y-Y which are at 45° to the generating line of the cylindrical lens 26b. The boundary X-X corresponds to the direction parallel to the guide tracks 23c on the optical disc 23, and the boundary Y-Y corresponds to the direction perpendicular to the guide tracks 23c.

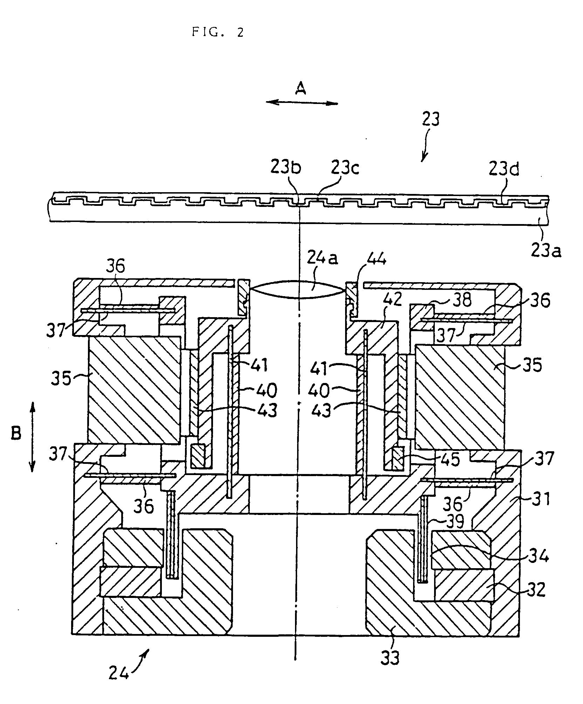

The objective lens 24a is, as seen in Fig. 2, can be driven both in the radial direction of the optical disc 23 as indicated by an arrow A (hereinafter referred to as the tracking direction) and in the direction perpendicular to the surface of the optical disc 23 as indicated by an arrow B (hereinafter referred to as the focusing direction). To move the objective lens 24a in the focusing direction, a focusing magnetic circuit comprising a focusing magnet 32, a focusing yoke 33 and a focusing magnetic gap 34 is provided at an end portion of the inner side of a cylindrical stationary support 31. A tracking magnetic circuit comprising a pair of opposed tracking magnets 35, is provided in the vicinity of the other end of the stationary support 31.

An intermediate support 38 movably retained by parallel springs 37 is provided within the stationary support 31. The parallel springs 37 are lined with elastic rubber material 36 and are movable in the focusing direction. At an end of the intermediate support 38 a focusing coil 39 is provided, inserted in the focusing magnetic gap 34 with a specified space around the focusing coil 39.

An objective lens barrel 42 movably supported by parallel springs 41, is mounted within the intermediate support 38. The parallel springs 41 are also lined with elastic rubber material 40, and are movable in the tracking direction. On the outside wall of the objective lens barrel 42 tracking coils 43 are mounted adjacent to the tracking magnets 35. At one end of the objective lens barrel 42, an objective lens holder 44 for retaining the objective lens 24a is mounted rotatably with respect to the objective lens barrel 42. A counter balance weight 45 is provided at the other end of the objective lens barrel 42.

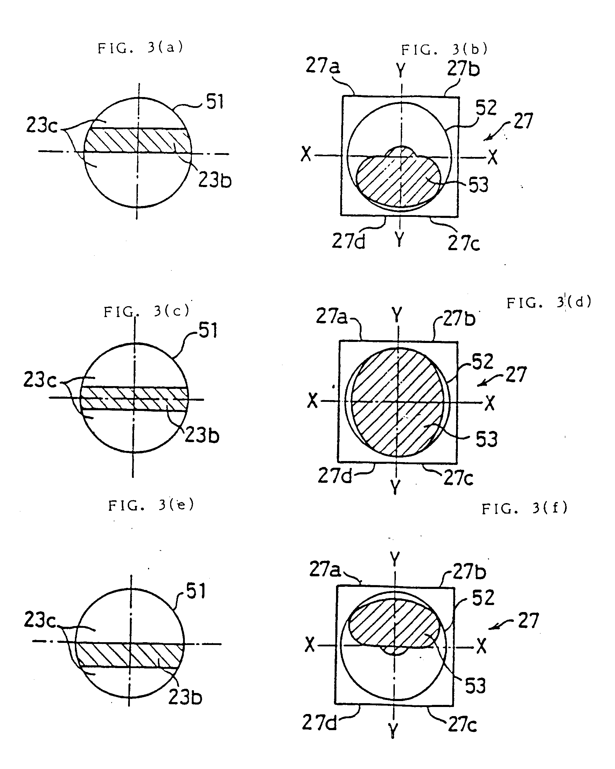

In the focusing error detecting device of the above described construction, a shadow 53 attributable to diffraction by the guide tracks 23c (hereinafter referred to as a diffraction pattern) is formed in the beam spot 52 projected on the quadrant-division optical detector 27 as shown in Fig. 3(b), 3(d) or 3(f). The diffraction pattern 53 changes with displacement of the beam spot 51 in relation to the data tracks 23b on the optical disc 23 as illustrated in Figs. 3(b), 3(d) and 3(f). As can be seen, there is no crosstalk in the diffraction pattern 53, as in the previously described prior art arrangement.

Assuming the light quantities received by the four optical sensor blocks 27a, 27b, 27c and 27d of the quadrant-division optical detector 27 are Sa, Sb, Sc and Sd, respectively, the degree of focalization "f" of the beam spot 51 formed on the optical disc 23 is calculated by the expression: (Sa + Sc) - (Sb + Sd). If the beam spot 51 is properly focused, the degree of focalization "f" is always 0 (zero) independent of the position of the beam spot 51 with respect to the data tracks 23b.

Accordingly, if the distance between the objective lens 24a and the optical disc 23 is close to the focal length, it is possible to detect focusing error accurately on the basis of the degree of focalization "f" which may be positive, zero or negative. This permits stable focusing control.

The positions of the objective lens 24a and collimator lens 22a need not be changed once they have been adjusted. Therefore, after position adjustment, the objective lens 24a may be secured together with the objective lens holder 44 to the objective lens barrel 42, and the collimator lens 22a may be secured together with a collimator lens holder (not shown) to the housing 28 by using adhesives.

In the first embodiment of the present invention described above, the rotational positions of both the objective lens 24a and the collimator lens 22a were adjusted, but it is not necessary to adjust both of them. The same advantageous effect as in the first embodiment is obtained in a modification in which the rotational position of either the objective lens 24a or the collimator lens 22a is adjusted with the other remaining fixed.

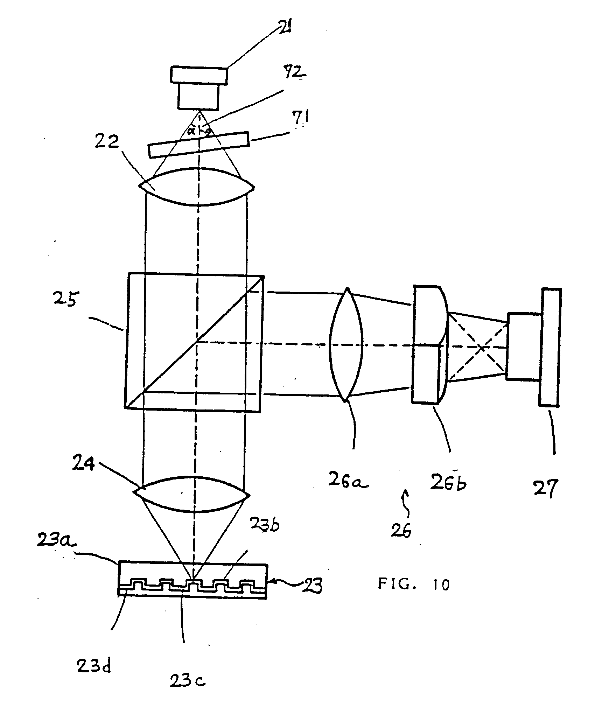

The second embodiment of the present invention will now be described with reference to Fig. 10 which shows the construction of a focusing error detecting device made in accordance with a second method of the present invention.

Referring to Fig. 10, a glass parallel plate 71 is disposed between the collimator lens 22 and the semiconductor laser 21. The parallel plate 71 is rotatable about the optical axis 72.

Assuming that the parallel plate 71 has a thickness "t" and a refractive index "n" and is inclined at an angle ϑ to the optical axis in a light beam with divergent angle α, the parallel plate 71 generates and astigmatism expressed by :

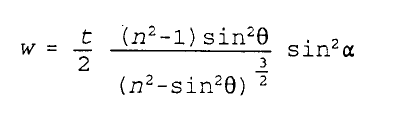

In the second embodiment, the astigmatism introduced by the parallel plate 71 is used to eliminate astigmatism of orientation neither parallel nor perpendicular to the data tracks 23c which may remain in the optical system between the light source 21 and the optical disc 23, thereby obtaining a focusing error signal of good quality. The orientation of astigmatism is controllable by rotating the parallel plate 71 about the optical axis, and the extent of astigmatism can be controlled either by changing the inclination angle ϑ of the parallel plate 71 or by varying the thickness "t" and refractive index "n" of the parallel plate 71. To obtain a diffraction pattern symmetrical with respect to the axis corresponding to the direction at right angles to the guide tracks 23c of the optical disc 23 as shown in Fig. 3(b), 3(d) or 3(f), therefore, a parallel plate 71 of appropriate thickness and of appropriate refractive index is set at an appropriate angle to the optical axis so as to offset the astigmatism originating in the optical system between the light source 21 and the optical disc 23. Thus, according to the present invention, no crosstalk occurs in the diffraction pattern so that stable focus control is attained.

In the above second embodiment of the present invention, the parallel plate 71 is placed in the divergent zone of the laser beam. However, the same advantageous effect is obtained by placing the parallel plate 71 in the convergent zone of the laser beam.

According to the present invention, as will be understood from the above, aberration in the optical system between the light source and the optical disc is eliminated. Therefore, the symmetry with respect to the axis corresponding to the direction perpendicular to the guide tracks, of the diffraction pattern in the beam spot formed on the optical detector will never be impaired by aberration of the optical system. As a result, the focusing error detecting device made in accordance with the method of the present invention provides stable focus control without deteriorating the quality of the focusing error signal.

The focusing error detecting device of the present invention may be used in apparatus which records and reproduces data on a data-recording disc such as an optical disc or an optical magnetic disc with concentric or spiral data tracks and guide tracks formed thereon.

## Claims

1. A method of manufacturing a focusing error detecting device, comprising the steps of:
providing a light source (21); a collimator lens (22a) for making parallel the beam of rays emitted by said light source (21); an objective lens (24a) to focus the parallel beam of rays to form a beam spot on a data-recording disc (23) with data tracks and guide tracks formed thereon and which receives the beam of rays reflected from said data-recording disc (23); an optical system (25,26a,26b) for forming a beam spot in the form of astigmatism from the reflected beam of rays incident on said objective lens (24a); and an optical detector (27) having a plurality of divided optical sensor blocks (27a-d) for receiving the beam spot formed on said optical detector (27); and
arranging said optical detector (27) to detect the focusing error of the beam spot formed on said data-recording disc (23) on the basis of the configuration of the received beam spot,
said method being characterised by the step of adjusting said objective lens (24a) and/or, said collimator lens (22a) to such rotational positions about the optical axis as to minimize the influence which aberration in the optical system between the light source (21) and the optical disc (23) has on the symmetry with respect to the axis corresponding to the direction at right angles to the guide tracks, of a diffraction pattern formed in said beam spot on the optical detector (27).

2. A method of manufacturing a focusing error detecting device, comprising the steps of:
providing a light source (21); a collimator lens (22) for making parallel the beam of rays emitted by said light source (21); an objective lens (24) to focus the parallel beam of rays to form a beam spot on a data-recording disc (23) with data tracks and guide tracks formed thereon and which receives the beam of rays reflected from said data-recording disc (23); an optical system (25,26a,26b) for forming a beam spot in the form of astigmatism from the reflected beam of rays incident on said objective lens (24); a parallel plate (71) inclined with respect to the optical axis; and an optical detector (27); and
arranging said optical detector to detect the focusing error of the beam spot formed on said data-recording disc (23) on the basis of the configuration of the received beam spot;
said method being characterised by the step of placing the parallel plate (71) in either the optical divergent or the convergent zone in the optical path between a light source (21) and a data-recording disc (23), and adjusting the rotational position of said parallel plate (71) about the optical axis so as to minimize the influence which astigmatism in the optical system between the light source (21) and the data-recording disc (23) has on the symmetry with respect to the axis corresponding to the direction at right angles to the guide tracks, of a diffraction pattern formed in said beam spot on the optical detector (27).

3. A focusing error detecting device made in accordance with the method of claim 1.

4. A focusing error detecting device made in accordance with the method of claim 2.

5. Optical data detecting apparatus for recording and/or reproducing and/or erasing information on an optical recording medium (23) including the focusing error detecting device of claim 3 or claim 4.

## Patentansprüche

1. Verfahren zum Herstellen einer Vorrichtung zum Nachweisen von Fokussierungsfehlern mit folgenden Schritten:
Bereitstellen einer Lichtquelle (21); einer Kollimatorlinse (22a), um die von der Lichtquelle (21) ausgesandten Strahlen parallel zueinander laufen zu lassen; einer Objektivlinse (24a), um das parallel verlaufende Strahlenbündel zu fokussieren, um einen Strahlenfleck auf einer datenaufzeichnenden Platte (23) mit darauf gebildeten Datenspuren und Führungsspuren zu bilden, und welche das Strahlenbündel, das von der datenaufzeichnenden Platte (23) reflektiert wird, empfängt; eines optischen Systems (25, 26a, 26b) zur Bildung eines Strahlenflecks in Form eines Astigmatismus von dem reflektierten Strahlenbündel, welches auf die Objektivlinse (24a) auftrifft; und eines optischen Detektors (27) mit einer Anzahl von geteilten optischen Sensorblöcken (27 a-d) zum Empfangen des Strahlenflecks, der auf dem optischen Detektor (27) gebildet wird; und
Anordnen des optischen Detektors (27) zum Nachweisen des Fokussierungsfehlers des auf der datenaufzeichnenden Platte (23) gebildeten Strahlenflecks auf Basis der Konfiguration des empfangenen Strahlenflecks,
wobei das Verfahren durch folgenden Schritt **gekennzeichnet** ist: Einstellen der Objektivlinse (24a) und/oder der Kollimatorlinse (22a) auf solche Drehpositionen um die optische Achse, daß der Einfluß, den die Aberration in dem optischen System zwischen der Lichtquelle (21) und der optischen Platte (23) auf die Symmetrie eines in dem Strahlenfleck auf dem optischen Detektor (27) gebildeten Beugungsmusters hat, und zwar auf die Symmetrie bezüglich der Achse entsprechend der Richtung in rechten Winkeln zu den Führungsspuren, minimiert wird.

2. Verfahren zum Herstellen einer Vorrichtung zum Nachweisen von Fokussierungsfehlern mit folgenden Schritten:
Bereitstellen einer Lichtquelle (21); einer Kollimatorlinse (22), um die von der Lichtquelle (21) ausgesandten Strahlen parallel zueinander laufen zu lassen; einer Objektivlinse (24), um das parallel verlaufende Strahlenbündel zu fokussieren, um einen Strahlenfleck auf einer datenaufzeichnenden Platte (23) mit darauf gebildeten Datenspuren und Führungsspuren zu bilden, und welche das Strahlenbündel, das von der datenaufzeichnenden Platte (23) reflektiert wird, empfängt; eines optischen Systems (25, 26a, 26b) zur Bildung eines Strahlenflecks in Form eines Astigmatismus von dem reflektierten Strahlenbündel, welches auf die Objektivlinse (24) auftrifft; einer parallelen Platte (71), die in bezug auf die optische Achse geneigt ist; und eines optischen Detektors (27); und
Anordnen des optischen Detektors zum Nachweisen des Fokussierungsfehlers des auf der datenaufzeichnenden Platte (23) gebildeten Strahlenflecks auf Basis der Konfiguration des empfangenen Strahlenflecks;
wobei das Verfahren durch folgenden Schritt **gekennzeichnet** ist:
Anordnen der parallelen Platte (71) in entweder der optischen divergenten oder der konvergenten Zone in dem optischen Weg zwischen einer Lichtquelle (21) und einer datenaufzeichnenden Platte (23), und Einstellen der Drehposition der parallelen Platte (71) um die optische Achse, um so den Einfluß, den der Astigmatismus in dem optischen System zwischen der Lichtquelle (21) und der datenaufzeichnenden Platte (23) auf die Symmetrie eines in dem Strahlenfleck auf dem optischen Detektor (27) gebildeten Beugungsmusters hat, und zwar auf die Symmetrie bezüglich der Achse entsprechend der Richtung in rechten Winkeln zu den Führungsspuren, zu minimieren.

3. Vorrichtung zum Nachweis von Fokussierungsfehlern, die gemäß dem Verfahren nach Anspruch 1 hergestellt ist.

4. Vorrichtung zum Nachweis von Fokussierungsfehlern, die gemäß dem Verfahren nach Anspruch 2 hergestellt ist.

5. Optisches Datennachweis-Gerät zum Aufnehmen und/oder Wiedergeben und/oder Löschen von Informationen auf einem optischen Aufnahmemedium (23), das die Vorrichtung zum Nachweis von Fokussierungsfehlern gemäß Anspruch 3 oder 4 einschließt.

## Revendications

1. Méthode de fabrication d'un dispositif de détection d'erreur de focalisation, comprenant les opérations consistant à:
fournir une source lumineuse (21); une lentille collimatrice (22a) pour rendre parallèle le faisceau de rayons émis par ladite source lumineuse (21); une lentille d'objectif (24a) pour focaliser le faisceau parallèle de rayons en vue de former une tache de faisceau sur un disque d'enregistrement de données (23) avec des pistes de données et des pistes de guidage formées sur celui-ci et qui reçoit le faisceau de rayons réfléchis provenant dudit disque d'enregistrement de données (23); un système optique (25, 26a, 26b) en vue de former une tache de faisceau dans la forme astigmatique provenant du faisceau réfléchi de rayons incidents sur ladite lentille d'objectif (24a); et un détecteur optique (27) ayant un ensemble de blocs détecteurs optiques divisés (27a-d) pour recevoir la tache de faisceau formée sur ledit détecteur optique (27); et
agencer ledit détecteur optique (27) en vue de détecter l'erreur de focalisation de la tache de faisceau formée sur ledit disque d'enregistrement de données (23) en se fondant sur la configuration de la tache de faisceau reçue,
ladite méthode étant caractérisée par l'opération consistant à ajuster ladite lentille d'objectif (24a) et/ou ladite lentille collimatrice (23a) à des positions pivotantes autour de l'axe optique afin de minimiser l'Influence qu'une aberration, dans le système optique entre la source lumineuse (21) et le disque optique (23), a sur la symétrie par rapport à l'axe correspondant à la direction à angle droit par rapport aux pistes de guidage, d'une tache de diffraction formée dans ladite tache de faisceau sur le détecteur optique (27)

2. Méthode de fabrication d'un dispositif de détection d'erreur de focalisation, comprenant les opérations consistant à:
fournir une source lumineuse (21); une lentille collimatrice (22) pour rendre parallèle le faisceau de rayons émis par ladite source lumineuse (21); une lentille d'objectif (24) pour focaliser le faisceau parallèle de rayons pour former une tache de faisceau sur un disque d'enregistrement de données (23) avec des pistes de données et des pistes de guidage formées sur celui-ci, et qui reçoit le faisceau de rayons réfléchis provenant dudit disque d'enregistrement de données (23); un système optique (25, 26a, 26b) pour former une tache de faisceau dans la forme astigmatique provenant du faisceau réfléchi de rayons incidents sur ladite lentille d'objectif (24); une lame parallèle (71) inclinée par rapport à l'axe optique; et un détecteur optique (27); et
agencer ledit détecteur optique en vue de détecter l'erreur de focalisation de la tache de faisceau formée sur ledit disque d'enregistrement de données (23) en se fondant sur la configuration de la tache de faisceau reçue;
ladite méthode étant caractérisée par l'opération consistant à placer la lame parallèle (71) dans la zone optique divergente ou convergente dans le chemin optique entre la source lumineuse (21) et un disque d'enregistrement de données (23), et à ajuster la position tournante de ladite lame parallèle (71) autour de l'axe optique de façon à minimiser l'influence qu'un astigmatisme, dans le système optique entre la source lumineuse (21) et le disque d'enregistrement de données (23), a sur la symétrie,par rapport à l'axe correspondant à la direction à angle droit par rapport aux pistes de guidage, d'une tache de diffraction formée dans ladite tache de faisceau sur le détecteur optique (27).

3. Dispositif de détection d'erreur de focalisation fabriqué selon la méthode de la revendication 1.

4. Dispositif de détection d'erreur de focalisation fabriqué selon la méthode de la revendication 2.

5. Appareil de détection de données optiques pour enregistrer et/ou reproduire et/ou effacer une information sur un milieu d'enregistrement optique (23) comprenant le dispositif de détection d'erreur de focalisation selon la revendication 3 ou 4.
